# EUROPEAN PATENT APPLICATION

(11) **EP 4 826 526 A1**
(43) Date of publication of application: **21.10.2026**
(21) Application number: 26165788.6
(22) Date of filing: 18.03.2026
(51) Int. Cl.: G06F 8/65

(54) **UPDATING THE FIRMWARE OF A TARGET ECU IN A VEHICLE AFTER DISPLAYING THE "DOWNLOAD COMPLETE" MESSAGE ONLY A LOW VEHICLE SPEED**

(30) Priority: 16.04.2025 JP 2025067514
(71) Applicant: Toyota Jidosha Kabushiki Kaisha, Toyota-shi, Aichi-ken 471-8571 (JP)
(72) Inventor: SASAKI FURUTA, Shiori, Toyota-shi, 471-8571 (JP); NAKABAYASHI, Kei, Toyota-shi, 471-8571 (JP); SATOH, Yusuke, Toyota-shi, 471-8571 (JP)
(74) Representative: J A Kemp LLP

(57) **Abstract**

A control device (50) is configured to perform control of a display (32) that is configured to display an image showing information relating to a software update of an electronic control device (40) installed in a vehicle (30). The control device (50) includes an execution device (51). The execution device (51) is configured to, after a download process of software information (SF) including information relating to the software update has been completed, display on the display (32) a download-completed image (DP2) showing that the download process has been completed, on condition that a traveling speed (DS) of the vehicle (30) is lower than a specified speed (RS).

## Description

### BACKGROUND OF THE INVENTION

### 1. Field of the Invention

The present disclosure relates to a control device and a vehicle.

### 2. Description of Related Art

Japanese Unexamined Patent Application Publication No. 2021-197079 (JP 2021-197079 A) describes a server and a vehicle. The vehicle includes electronic control devices and a software update device. The software update device performs a software update applied to a target electronic control device using software information provided from a server outside the vehicle.

### SUMMARY OF THE INVENTION

Some vehicles include a display that displays an image showing information relating to a software update. It is conceivable that when a download process in the software update has been completed, a control device that performs control of what is displayed on the display displays an image showing that the download process has been completed. Depending on the state of the vehicle, however, it is not always appropriate to display the image showing that the download process has been completed.

A first aspect of the present disclosure relates to a control device that performs control of a display that is configured to display an image showing information relating to a software update of an electronic control device installed in a vehicle. The control device includes an execution device configured to, after a download process of software information including information relating to the software update has been completed, display on the display an image showing that the download process has been completed, on condition that a traveling speed of the vehicle is lower than a specified speed that is specified beforehand.

In this control device, even when the download process of the software information has been completed, the execution device does not display on the display the image showing that the download process has been completed, if the traveling speed of the vehicle is not lower than the specified speed. Thus, the control device can prevent a driver of the vehicle from becoming distracted by what is displayed on the display as the image showing that the download process has been completed is displayed on the display in a state where the traveling speed of the vehicle is equal to or higher than the specified speed.

In the control device according to the first aspect of the present disclosure, the display may be configured to accept a touch operation, the download-completed image may include an image showing an agreement switch, and the execution device may be configured to determine whether a user has touch-operated the image showing the agreement switch, and, in a case where the execution device determines that the user has touch-operated the image showing the agreement switch, display on the display an installation agreement image showing information relating to an agreement to an installation process.

In the control device according to the first aspect of the present disclosure, the specified speed may be a speed higher than zero, and the execution device may be further configured to, after an installation process of the software information has been completed, display on the display an installation-completed image showing that the installation process has been completed, on condition that the vehicle is in a stationary state.

In the control device according to the first aspect of the present disclosure, the display may be configured to accept a touch operation, the installation-completed image may include an image showing a confirmation switch, and the execution device may be configured to determine whether the user has touch-operated the image showing the confirmation switch, and, in a case where the execution device determines that the user has touch-operated the image showing the confirmation switch, display on the display an activation detail image showing detailed information relating to an activation process.

In the control device according to the first aspect of the present disclosure, the detailed information may include information showing an operation on the vehicle that is needed to perform the activation process.

In the control device according to the first aspect of the present disclosure, the execution device may be configured to stop displaying the download-completed image on the display in a case where the traveling speed of the vehicle is equal to or higher than the specified speed.

In the control device according to the first aspect of the present disclosure, the execution device may be configured to, in a case where the traveling speed of the vehicle is equal to or higher than the specified speed, display on the display the download-completed image after the traveling speed of the vehicle has changed to be lower than the specified speed.

A second aspect of the present disclosure relates to a vehicle. The vehicle includes a processor, and a display configured to display an image showing information relating to a software update of the processor. The processor is configured to perform control of the display perform a download process of software information including information relating to the software update, determine whether a traveling speed of the vehicle is lower than a specified speed that is specified beforehand after the download process of the software information has been completed, and display on the display a download-completed image showing that the download process has been completed in a case where the traveling speed of the vehicle is lower than the specified speed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view showing a communication system of one embodiment;
FIG. 2 is an explanatory view showing a series of processes relating to a software update performed by the communication system of FIG. 1;
FIG. 3 is a flowchart showing a series of processes relating to control of what is displayed on a display relating to the software update performed by the master ECU of FIG. 1;
FIG. 4 is a schematic view showing a download-in-progress image mentioned in FIG. 3;
FIG. 5 is a schematic view showing a download-completed image mentioned in FIG. 3;
FIG. 6 is a schematic view showing an installation agreement image mentioned in FIG. 3;
FIG. 7 is a flowchart showing a series of processes relating to control of what is displayed on the display relating to the software update performed by the master ECU of FIG. 1;
FIG. 8 is a schematic view showing an installation-in-progress image mentioned in FIG. 7;
FIG. 9 is a schematic view showing an installation-completed image mentioned in FIG. 7; and
FIG. 10 is a schematic view showing an activation detail image mentioned in FIG. 7.

### DETAILED DESCRIPTION OF EMBODIMENTS

### First Embodiment

One embodiment of a control device that performs control of a display will be described with reference to the drawings. In the following, a description will be given of a communication system that includes a vehicle having the control device.

### Overview of Communication System

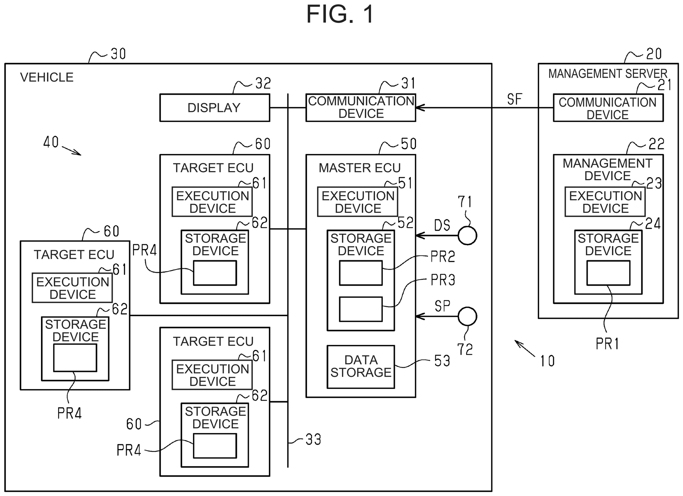

As shown in FIG. 1, a communication system 10 includes a management server 20 and a vehicle 30. The communication system 10 manages software updates in the vehicle 30. The vehicle 30 may be an autonomous vehicle.

The management server 20 manages generation and provision of software information SF that is needed for software updates performed in the vehicle 30. The software information SF is, for example, data on updated programs for performing software updates.

The management server 20 includes a communication device 21 and a management device 22. The communication device 21 can wirelessly communicate with the vehicle 30 through a wireless communication line. The communication device 21 can transmit the software information SF to the vehicle 30.

The management device 22 manages generation and provision of the software information SF. The management device 22 has an execution device 23 and a storage device 24. The execution device 23 is a CPU. The storage device 24 is a memory.

The storage device 24 stores a management program PR1 for performing a software update by Over The Air (OTA). The management program PR1 is a program for making the execution device 23 perform a series of processes that the management server 20 performs to perform a software update, including the process of generating the software information SF.

The storage device 24 stores determination information for determining whether there is any software update available. The determination information is updated as information is input from, for example, an automobile manufacturer. The determination information includes, for example, the latest version information on software resulting from performing the latest software update. The process performed by the management program PR1 will be described in detail later.

The execution device 23 transmits the generated software information SF from the communication device 21 to the vehicle 30. Thus, the management server 20 provides the software information SF needed for a software update to the vehicle 30.

The vehicle 30 includes a communication device 31, a display 32, an internal bus 33, and a plurality of electronic control devices 40. The communication device 31, the display 32, and the electronic control devices 40 are communicably connected to one another by the internal bus 33.

The communication device 31 can wirelessly communicate with the management server 20 through a wireless communication line. The communication device 31 is a so-called data communication module (DCM).

The display 32 can display images showing various information. The display 32 displays images showing information relating to a software update. In this embodiment, the display 32 is located near a driver seat of the vehicle 30. The display 32 is a touch display. That is, the display 32 can accept a touch operation from a user.

The electronic control devices 40 include a master ECU 50 and a plurality of target ECUs 60. "ECU" stands for "Electronic Control Unit." The electronic control devices 40 are installed in the vehicle 30.

The master ECU 50 performs various processes for performing a software update to be applied to the target ECU 60. The master ECU 50 controls what is displayed on the display 32. The master ECU 50 is a control device in this embodiment.

The master ECU 50 includes an execution device 51 that is a processing circuit, a storage device 52, and a data storage 53. The execution device 51 is a CPU. The storage device 52 is a memory. The storage device 52 stores a master program PR2 for functioning as an OTA master and a control program PR3 for controlling what is displayed on the display 32.

By executing the master program PR2, the execution device 51 functions as the OTA master that performs various processes for performing a software update to be applied to the target ECU 60. The execution device 51 controls what is displayed on the display 32 by executing the control program PR3. These processes will be described in detail later. The data storage 53 is a memory that temporarily stores data.

The target ECUs 60 control various actuators installed in the vehicle 30 or perform various information processing. One of the target ECUs 60 is, for example, an engine ECU. The engine ECU is an ECU for controlling an engine installed in the vehicle 30.

One of the target ECUs 60 is, for example, a brake ECU. The brake ECU is an ECU for controlling a brake device installed in the vehicle 30. One of the target ECUs 60 is, for example, a steering ECU. The steering ECU is an ECU for controlling a steering device installed in the vehicle 30.

One of the target ECUs 60 is, for example, an ADAS ECU. "ADAS" stands for "Advanced Driving Assistant System." The ADAS ECU is an ECU for providing advanced driving assistance functions, such as automatic braking and sudden start prevention.

One of the target ECUs 60 is, for example, a PCU. "PCU" stands for "Power Control Unit." The PCU is an ECU for performing electricity control in the vehicle 30.

The target ECU 60 includes an execution device 61 that is a processing circuit and a storage device 62. The execution device 61 is a CPU. The storage device 62 is a double-sided memory. In addition to software for controlling various actuators and performing various information processing, the storage device 62 stores a target program PR4 for performing various processes to perform a software update. The software stored in the storage device 62 is updated by a software update. This software includes programs and data.

The vehicle 30 includes a vehicle speed sensor 71 and a shift position sensor 72. The vehicle speed sensor 71 detects a traveling speed DS of the vehicle 30. The vehicle speed sensor 71 outputs a signal indicating the detected traveling speed DS to the master ECU 50.

The shift position sensor 72 detects a shift position SP set by a shift lever. The shift position sensor 72 outputs a signal indicating the detected shift position SP to the master ECU 50.

### Overview of Software Update

The communication system 10 proceeds with the series of processes of a software update as the management server 20, the master ECU 50, and the target ECU 60 each perform processes.

To perform a software update, in the management server 20, the execution device 23 executes the management program PR1. To perform a software update, in the master ECU 50, the execution device 51 executes the master program PR2. To perform a software update, in the target ECU 60, the execution device 61 executes the target program PR4.

In the following description, processes in the execution device 23 will be described as processes performed by the management server 20, processes in the execution device 51 as processes performed by the master ECU 50, and processes in the execution device 61 as processes performed by the target ECU 60.

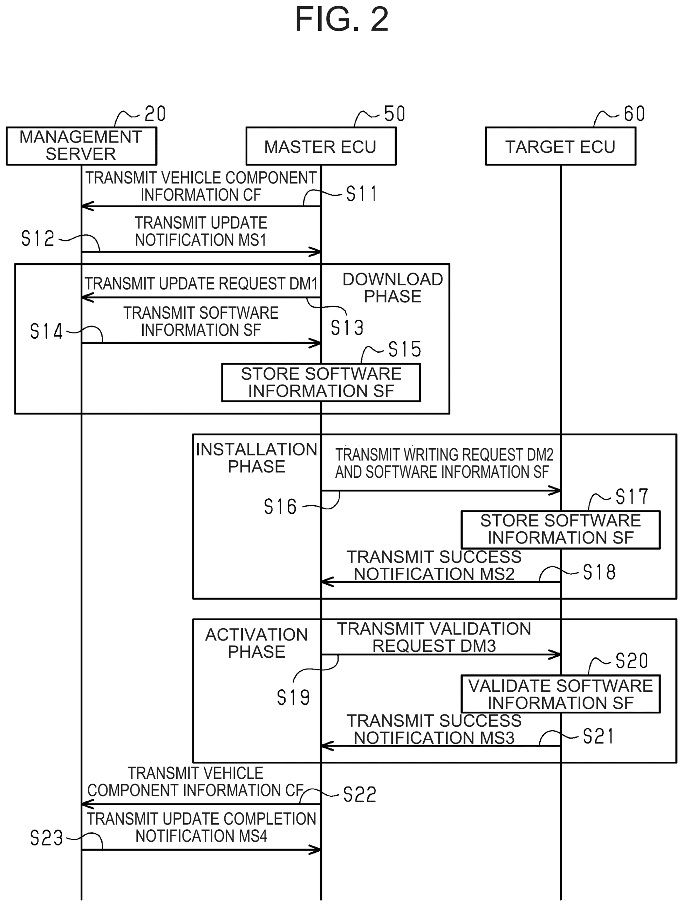

As shown in FIG. 2, when the communication system 10 performs a software update, first, the master ECU 50 performs the process of step S11. In step S11, the master ECU 50 transmits vehicle component information CF to the management server 20. The vehicle component information CF includes information showing the electronic control devices 40 installed in the vehicle 30 and version information showing the version of software applied to each electronic control device 40.

The master ECU 50 updates the vehicle component information CF by acquiring version information from the electronic control devices 40 on a prespecified cycle. Then, the master ECU 50 transmits the updated vehicle component information CF to the management server 20.

Thereafter, when the management server 20 acquires the vehicle component information CF from the vehicle 30, the management server 20 determines whether there is any software update available based on the acquired vehicle component information CF and the stored determination information for determining whether there is any software update available.

Specifically, the management server 20 compares the version information on the electronic control devices 40 included in the acquired vehicle component information CF and the latest version information included in the determination information. When the version information on the electronic control devices 40 included in the vehicle component information CF differs from the latest version information, the management server 20 determines that there is a software update available.

When the management server 20 determines that there is a software update available, the management server 20 performs the process of step S12. In step S12, the management server 20 transmits an update notification MS1 showing that there is a software update available to the vehicle 30.

Thereafter, when the vehicle 30 acquires the update notification MS1, the master ECU 50 controls the display 32 so as to display on the display 32, to the user of the vehicle 30, a notification showing that there is a software update available.

When a touch-operation indicating that a software update is to be performed is performed on the display 32, the master ECU 50 performs processes of a download phase including a download process. In the processes of the download phase, the master ECU 50 first performs the process of step S13. In step S13, the master ECU 50 transmits an update request DM1 showing a request for a software update to the management server 20.

Thereafter, when the management server 20 receives the update request DM1, the management server 20 generates the software information SF that is needed to perform the software update. That is, the software information SF includes information relating to the software update. After the management server 20 generates the software information SF, the management server 20 performs the process of step S14. In step S14, the management server 20 transmits the software information SF to the vehicle 30.

Thereafter, when the vehicle 30 receives the software information SF, the master ECU 50 performs the process of step S15. In step S15, the master ECU 50 stores the software information SF in the data storage 53. That is, the master ECU 50 performs the download process of the software information SF. The master ECU 50 thereby completes the processes of the download phase. That is, the processes of the download phase include the processes of step S13 to step S15.

Thereafter, the master ECU 50 starts processes of an installation phase including an installation process. In the installation process, the master ECU 50 determines whether a touch-operation by which an agreement to performing the installation process is accepted has been performed on the display 32. When this touch-operation has been performed, the master ECU 50 performs the process of step S16. In step S16, the master ECU 50 transmits a writing request DM2 and the software information SF to the target ECU 60 that is subject to the software update. The writing request DM2 is a request for writing the software information SF into the storage device 62.

Thereafter, when the target ECU 60 acquires the writing request DM2 and the software information SF, the target ECU 60 performs the process of step S17. In step S17, the target ECU 60 stores the software information SF in the storage device 62. That is, the target ECU 60 performs the installation process of the software information SF. Thereafter, when the target ECU 60 has confirmed that the software information SF has been stored in the storage device 62, the target ECU 60 performs the process of step S18.

In step S18, the target ECU 60 transmits to the master ECU 50 a success notification MS2 showing that the writing of the software information SF has succeeded. The master ECU 50 and the target ECU 60 thereby complete the processes of the installation phase. That is, the processes of the installation phase include the determination as to whether an agreement to performing the installation process has been accepted and the processes of step S16 to step S18.

Thereafter, when the vehicle 30 meets a condition for performing processes of an activation phase, the master ECU 50 starts the processes of the activation phase. The condition that the vehicle 30 should meet to perform the processes of the activation phase is that a power source state of the vehicle 30 changes from an "off" state to an "on" state. In the processes of the activation phase, the master ECU 50 performs the process of step S19 when the power source state of the vehicle 30 has changed from the "off" state to the "on" state. In step S19, the master ECU 50 transmits to the target ECU 60 a validation request DM3 that requests validating the software information SF.

Thereafter, when the target ECU 60 acquires the validation request DM3, the target ECU 60 performs the process of step S20. In step S20, the target ECU 60 validates the software information SF. Thereafter, when the target ECU 60 has confirmed that the software information SF has been appropriately validated, the target ECU 60 performs the process of step S21.

In step S21, the target ECU 60 transmits to the master ECU 50 a success notification MS3 showing that the validation of the software information SF has succeeded. Thus, the master ECU 50 and the target ECU 60 complete the activation process. That is, the activation process includes the processes of step S19 to step S21.

Thereafter, the master ECU 50 performs the process of step S22. In step S22, the master ECU 50 updates the vehicle component information CF by acquiring the version information from the electronic control devices 40. Then, the master ECU 50 transmits the updated vehicle component information CF.

Thereafter, when the management server 20 receives the vehicle component information CF, the management server 20 performs the process of step S23. In step S23, the management server 20 determines whether the software update has been completed based on the received vehicle component information CF. Specifically, the management server 20 compares the version information included in the received vehicle component information CF and the latest version information included in the determination information. When the version information on the electronic control devices 40 included in the vehicle component information CF is the same as the latest version information, the management server 20 determines that the software update has been completed. When the management server 20 determines that the software update has been completed, the management server 20 transmits to the vehicle 30 an update completion notification MS4 showing that the software update has been completed. The communication system 10 thereby ends the series of processes in the software update.

### Control of What is Displayed on Display after Operation for Performing Software Update is Performed

In the master ECU 50, the execution device 51 controls what is displayed on the display 32 by executing the control program PR3. First, a description will be given of control of what is displayed on the display 32 that is performed by the master ECU 50 after a touch-operation indicating that a software update is to be performed is performed on the display 32.

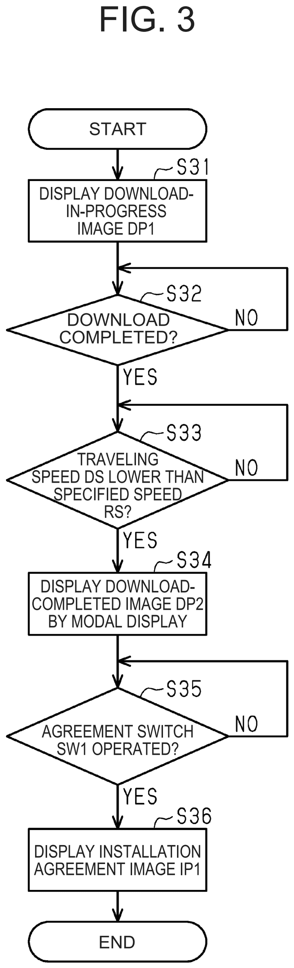

As shown in FIG. 3, when a touch-operation indicating that a software update is to be performed is performed on the display 32, the execution device 51 starts control of what is displayed on the display 32 in the download phase.

When the execution device 51 starts control of what is displayed on the display 32 in the download phase, the execution device 51 first performs the process of step S31. In step S31, the execution device 51 displays a download-in-progress image DP1 on the display 32. The download-in-progress image DP1 is an image showing that the processes of the download phase are currently executed.

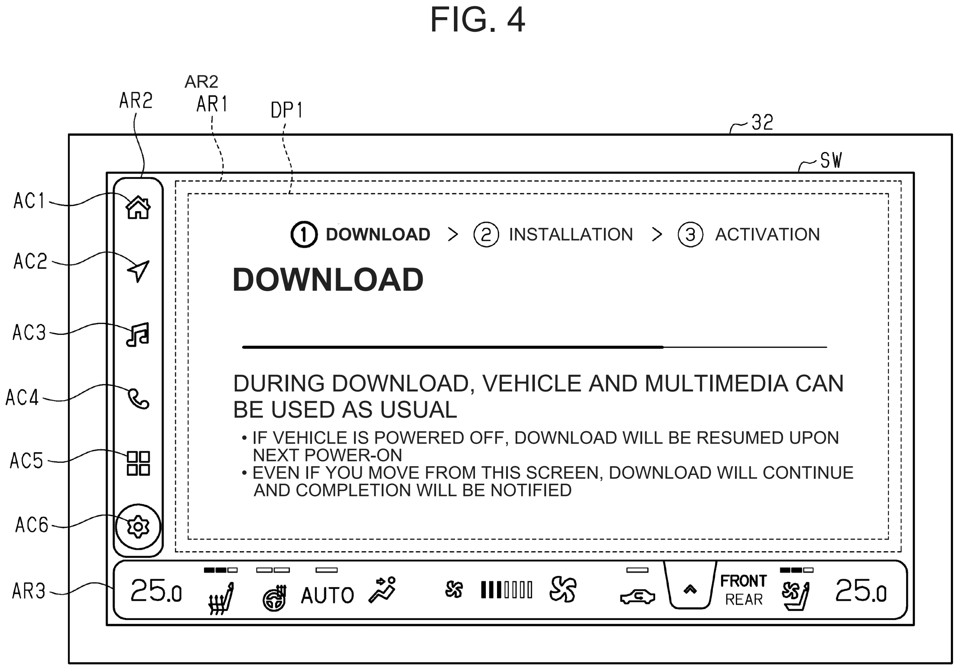

As shown in FIG. 4, the execution device 51 displays the download-in-progress image DP1 in a setting window SW of the display 32. The setting window SW includes a main region AR1, an application display region AR2, and a status display region AR3. The area of the main region AR1 is larger than the area of the application display region AR2 and the area of the status display region AR3. In this embodiment, the execution device 51 displays the download-in-progress image DP1 in the main region AR1.

The execution device 51 displays a plurality of icons in the application display region AR2. These icons include a home icon AC1, a navigation icon AC2, an audio icon AC3, a call icon AC4, a task management icon AC5, and a setting icon AC6.

The home icon AC1 is an icon that is touch-operated to display a home image for selecting an application to be used. The navigation icon AC2 is an icon that is touch-operated to start a navigation application and display a navigation image including a map image. The audio icon AC3 is an icon that is touch-operated to start an audio application and display an audio operation image for performing an audio operation.

The call icon AC4 is an icon for displaying a call image for making a hands-free call using a wirelessly connected mobile phone. The task management icon AC5 is an icon for displaying a task management image. The setting icon AC6 is an icon for displaying various setting images by a setting application. The setting window SW is a window displayed by the setting application.

The execution device 51 displays an image showing setting information relating to an air conditioning device and a heating device in the status display region AR3. The setting information relating to the air conditioning device includes information showing a set temperature of the air conditioning device for a driver seat, information showing a set mode of the air conditioning device for the driver seat, and information showing an intensity of the air conditioning device for the driver seat. The setting information relating to the air conditioning device includes information showing a set temperature of the air conditioning device for a front passenger seat and information showing an intensity of the air conditioning device for the front passenger seat. The setting information relating to the heating device includes information showing an intensity of a seat heater and information showing an intensity of a steering heater.

The information shown by the download-in-progress image DP1 includes information showing the state of the phase in the software update, information showing the extent of progress of the download process, and information relating to cautions during download.

The information showing the state of the phase in the software update in the download-in-progress image DP1 shows that, of the download phase, the installation phase, and the activation phase, the processes of the download phase are currently executed.

The information showing the extent of progress of the download process shows to what extent in leading to completion of the download process the download process has progressed. For example, the extent of progress of the download process is indicated by the length of a bar.

The information relating to cautions during download includes information showing that the functions of the vehicle 30 and the multimedia can be used during download just like when no software update is performed. The information relating to cautions during download includes information showing that if the power source of the vehicle 30 is turned off, the processes of the download phase will be resumed next time the power source of the vehicle 30 is switched from the "off" state to the "on" state. The information relating to cautions during download includes information showing that the processes of the download phase will continue even when the image displayed on the display 32 is changed from the setting window SW. The information relating to cautions during download includes information showing that after the processes of the download phase have been completed, a notification showing that the processes of the download phase have been completed will be made.

In a state where the setting window SW is displayed, the display 32 can accept a touch operation on the main region AR1 and the application display region AR2. Therefore, when an icon is touch-operated in a state where the download-in-progress image DP1 is displayed on the display 32, the execution device 51 switches the image displayed on the display 32 according to the touch-operated icon. For example, when the navigation icon AC2 is touch-operated in a state where the download-in-progress image DP1 is displayed on the display 32, the execution device 51 switches what is displayed on the display 32 so as to display a navigation window including the navigation image. After the execution device 51 displays the download-in-progress image DP1 on the display 32 in step S31, the execution device 51 moves on to the process of step S32.

In step S32, the execution device 51 determines whether the download process of the software information SF has been completed. When the download process of the software information SF has not been completed (S32: NO), the execution device 51 repeats the process of step S32.

On the other hand, when the download process of the software information SF has been completed (S32: YES), the execution device 51 moves on to the process of step S33. That is, after the download process of the software information SF has been completed, the execution device 51 performs the process of step S33. In step S33, the execution device 51 determines whether the traveling speed DS is lower than a specified speed RS that is specified beforehand. The specified speed RS is specified beforehand by testing or simulation as a lower limit speed which is a speed higher than zero and at and above which traveling can be predicted to continue.

When the traveling speed DS is equal to or higher than the specified speed RS (S33: NO), the execution device 51 repeats the process of step S33. On the other hand, when the traveling speed DS is lower than the specified speed RS (S33: YES), the execution device 51 moves on to the process of step S34. Thus, when the traveling speed DS is equal to or higher than the specified speed RS when the download process of the software information SF has been completed, the execution device 51 performs the process of step S34 on condition that the traveling speed DS has become lower than the specified speed RS. The execution device 51 may be configured to, if the traveling speed DS is equal to or higher than the specified speed RS when the download process of the software information SF has been completed, stop displaying the download-completed image DP2 on the display 32.

In step S34, the execution device 51 displays the download-completed image DP2 on the display 32 by modal display. The download-completed image DP2 is an image showing that the download process of the software information SF has been completed. The execution device 51 may be configured to, if the traveling speed DS is equal to or higher than the specified speed RS when the download process of the software information SF has been completed, display the download-completed image DP2 on the display 32 after the traveling speed DS has changed to be lower than the specified speed RS.

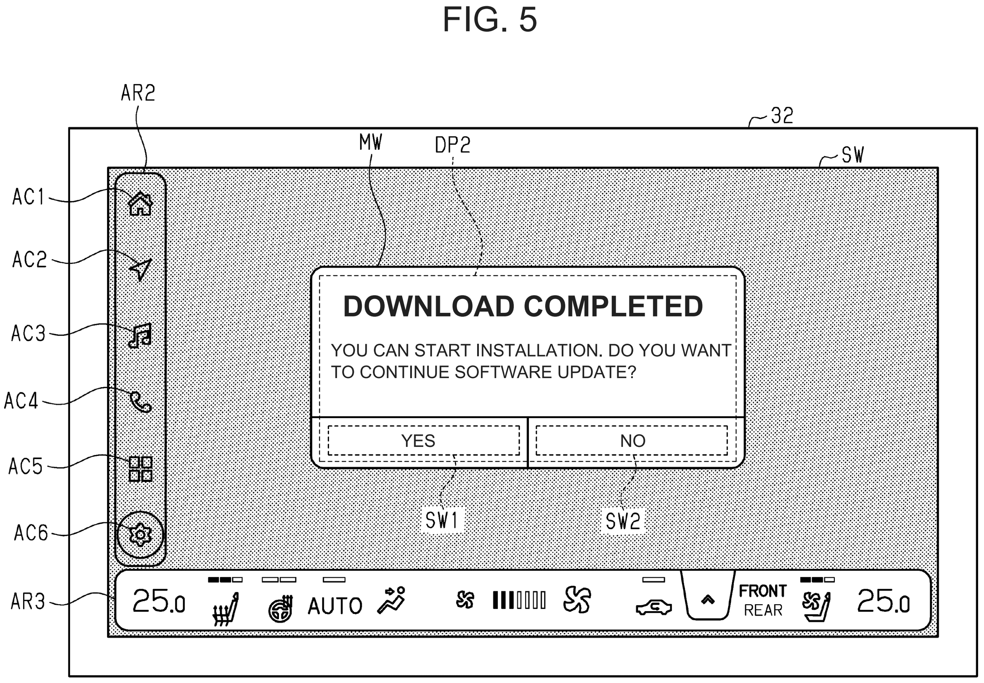

As shown in FIG. 5, in modal display, the execution device 51 displays the download-completed image DP2 in a modal window MW. In a state where the modal window MW is displayed, the execution device 51 can accept only a touch operation on the modal window MW. Therefore, in a state where the download-completed image DP2 is displayed, the execution device 51 does not accept a touch operation on the setting window SW.

The size of the modal window MW is smaller than the size of the setting window SW. Therefore, the modal window MW is displayed such that, of the setting window SW, the application display region AR2 and the status display region AR3 do not overlap the modal window MW.

The information shown by the download-completed image DP2 includes information showing that the download process of the software information SF has been completed. The information shown by the download-completed image DP2 includes information showing that the processes of the installation phase can be started. The information shown by the download-completed image DP2 includes information for inquiring of the user whether to continue the software update, i.e., perform the processes of the installation phase.

The download-completed image DP2 includes an image showing an agreement switch SW1 and an image showing a rejection switch SW2. The agreement switch SW1 is an image that is touch-operated to display an installation agreement image IP1 showing information relating to an agreement to the installation process. The rejection switch SW2 is an image that is touch-operated to accept a rejection of the installation process.

As shown in FIG. 3, after the execution device 51 displays the download-completed image DP2 by modal display, the execution device 51 moves on to the process of step S35. In step S35, the execution device 51 determines whether the agreement switch SW1 has been touch-operated. That is, the execution device 51 may be configured to determine whether the user has touch-operated the image showing the agreement switch SW1.

When the agreement switch SW1 has not been touch-operated (S35: NO), the execution device 51 repeats the process of step S35. When the rejection switch SW2 is touch-operated, the execution device 51 cancels the series of processes of the software update. In this case, the execution device 51 displays on the display 32 an image showing that the software update has been canceled, and ends the series of processes shown in FIG. 3. On the other hand, when the agreement switch SW1 has been touch-operated (S35: YES), the execution device 51 moves on to the process of step S36.

In step S36, the execution device 51 displays the installation agreement image IP1 on the display 32. The installation agreement image IP1 is an image for accepting an agreement to the installation process of the software information SF. That is, the execution device 51 may be configured to, when the execution device 51 determines that the user has touch-operated the image showing the agreement switch SW1, display the installation agreement image IP1 on the display 32.

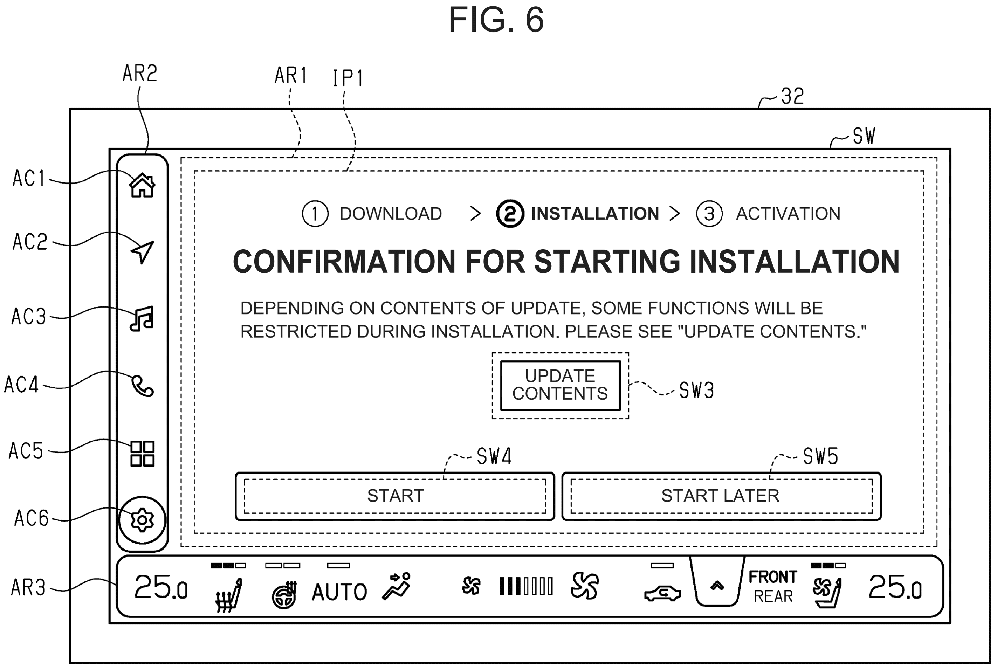

As shown in FIG. 6, the execution device 51 displays the installation agreement image IP1 in the main region AR1 of the setting window SW of the display 32. The information shown by the installation agreement image IP1 includes information showing the state of the phase in the software update, information showing the extent of progress of the installation process, and information relating to cautions during installation.

The information showing the state of the phase in the software update in the installation agreement image IP1 shows information showing that, of the download phase, the installation phase, and the activation phase, the processes of the installation phase are currently executed. The information relating to cautions during installation shows that, depending on the contents of the update, some of the functions of the vehicle 30 will be restricted during execution of the installation process.

The information showing the extent of progress of the installation process shows to what extent in leading to completion of the installation process the installation process has progressed. For example, the extent of progress of the installation process is indicated by the length of a bar.

The installation agreement image IP1 includes an image showing an update contents switch SW3, an image showing a start switch SW4, and an image showing a hold switch SW5. The update contents switch SW3 is a switch that is touch-operated to display an image showing details relating to update contents in the software update. The start switch SW4 is a switch that is touch-operated to accept an agreement to performing the installation process. The hold switch SW5 is a switch that is touch-operated to accept a rejection of the installation process. In this embodiment, the hold switch SW5 is represented by a string of characters indicating that the installation process will be started later.

When the start switch SW4 is touch-operated, the execution device 51 starts the installation process. On the other hand, when the hold switch SW5 is touch-operated, the execution device 51 puts the installation process on hold for a prespecified time.

After the execution device 51 displays the installation agreement image IP1 in the process of step S36, the execution device 51 ends the series of processes relating to control of what is displayed on the display 32 from when the software update is agreed to until when the installation process is agreed to.

### Control of What is Displayed on Display after Installation Process is Agreed to

Next, a description will be given of control of what is displayed on the display 32 after the execution device 51 accepts an agreement to the installation process as the start switch SW4 is touch-operated in the installation agreement image IP1.

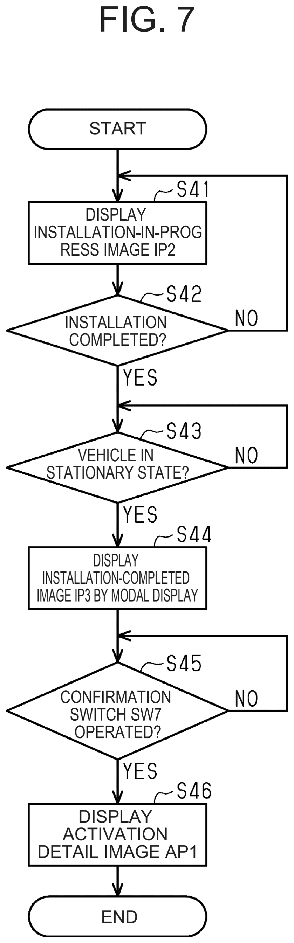

As shown in FIG. 7, when a touch operation indicating agreeing to the installation process is performed on the display 32, the execution device 51 starts the control of what is displayed on the display 32 after an agreement to the installation process is accepted.

When the execution device 51 starts the control of what is displayed on the display 32 in the installation phase, the execution device 51 first performs the process of step S41. In step S41, the execution device 51 displays the installation-in-progress image IP2 on the display 32. The installation-in-progress image IP2 is an image showing that the processes of the installation phase are currently executed.

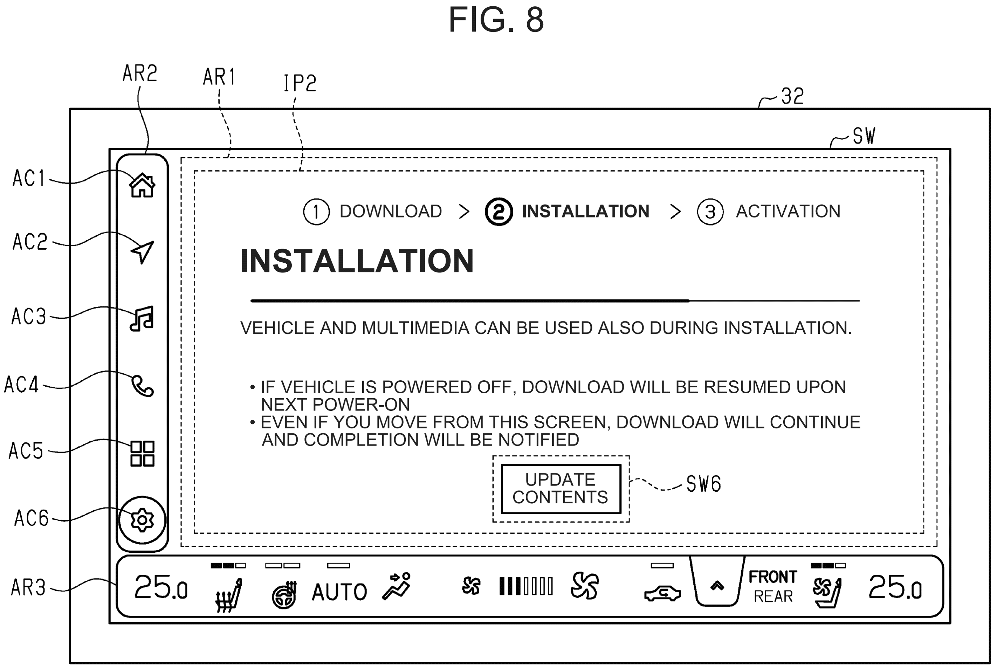

As shown in FIG. 8, the execution device 51 displays the installation-in-progress image IP2 in the setting window SW of the display 32. The execution device 51 displays the installation-in-progress image IP2 in the main region AR1.

Information shown by the installation-in-progress image IP2 includes information showing the state of the phase in the software update and information relating to cautions during installation. The information showing the state of the phase in the software update in the installation-in-progress image IP2 shows that, of the download phase, the installation phase, and the activation phase, the processes of the installation phase are currently executed.

The information relating to cautions during installation includes information showing that the vehicle 30 and the multimedia can be used during installation. The information relating to cautions during information includes information showing that if the power source of the vehicle 30 is put in the "off" state, the processes of the installation phase will be resumed next time the power source of the vehicle 30 is switched from the "off" state to the "on" state. The information relating to cautions during installation includes information showing that the processes of the installation phase will continue even when the image displayed on the display 32 is changed from the setting window SW.

The installation-in-progress image IP2 includes an image showing an update contents switch SW6 for showing details relating to the update contents in the software update. The update contents switch SW6 is a switch that is touch-operated to display an image showing details relating to the update contents in the software update.

As shown in FIG. 7, after the execution device 51 displays the installation-in-progress image IP2 on the display 32 in step S41, the execution device 51 moves on to the process of step S42.

In step S42, the execution device 51 determines whether the installation process of the software information SF has been completed. When the installation process of the software information SF has not been completed (S42: NO), the execution device 51 repeats the process of step S42.

On the other hand, when the installation process of the software information SF has been completed (S42: YES), the execution device 51 moves on to the process of step S43. That is, after the installation process of the software information SF has been completed, the execution device 51 performs the process of step S43. In step S43, the execution device 51 determines whether the vehicle 30 is in a stationary state. A stationary state is a state where a period in which the traveling speed DS of the vehicle 30 is zero has continued for a certain period or longer, or a state where the shift position SP is a parking position. Therefore, the execution device 51 determines whether the vehicle 30 is in a stationary state based on the acquired traveling speed DS and shift position SP.

When the vehicle 30 is not in a stationary state (S43: NO), the execution device 51 repeats the process of step S43. On the other hand, when the vehicle 30 is in a stationary state (S43: YES), the execution device 51 moves on to the process of step S44. That is, if the vehicle 30 is in a traveling state when installation has been completed, the execution device 51 performs the process of step S44 on condition that the vehicle 30 is in a stationary state.

In step S44, the execution device 51 displays an installation-completed image IP3 on the display 32 by modal display. The installation-completed image IP3 is an image showing that installation of the software information SF has been completed.

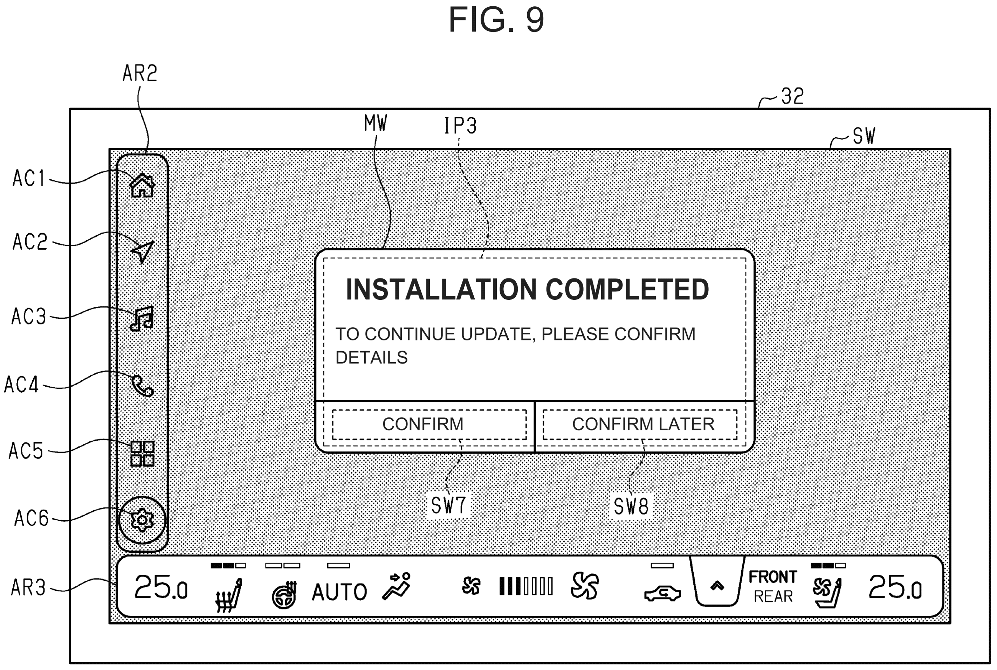

As shown in FIG. 9, the installation-completed image IP3 is displayed in the modal window MW. Information shown by the installation-completed image IP3 includes information showing that the installation process has been completed.

The installation-completed image IP3 includes an image showing a confirmation switch SW7 and an image showing a hold switch SW8. The confirmation switch SW7 is a switch that is touch-operated to display an activation detail image AP1 showing detailed information relating to the activation process that needs to be confirmed to start the processes of the activation phase. The hold switch SW8 is a switch for putting displaying the activation detail image AP1 on hold. The execution device 51 does not accept a touch operation on the setting window SW while the installation-completed image IP3 is displayed by modal display.

As shown in FIG. 7, after the execution device 51 displays the installation-completed image IP3 in step S44 by modal display, the execution device 51 moves on to the process of step S45. In step S45, it is determined whether the confirmation switch SW7 has been touch-operated. That is, the execution device 51 may be configured to determine whether the user has touch-operated the image showing the confirmation switch SW7.

When the confirmation switch SW7 has not been touch-operated (S45: NO), the execution device 51 repeats the process of step S45. When the hold switch SW8 has been touch-operated, the execution device 51 suspends the software update for a prespecified time, and when the prespecified time has passed, displays the installation-completed image IP3 on the display 32 again. On the other hand, when the confirmation switch SW7 has been touch-operated (S45: YES), the execution device 51 moves on to the process of step S46.

In step S46, the execution device 51 displays the activation detail image AP1 on the display 32. The activation detail image AP1 is an image showing detailed information relating to the activation process. That is, the execution device 51 may be configured to, when the execution device 51 determines that the user has touch-operated the image showing the confirmation switch SW7, display the activation detail image AP1 on the display 32.

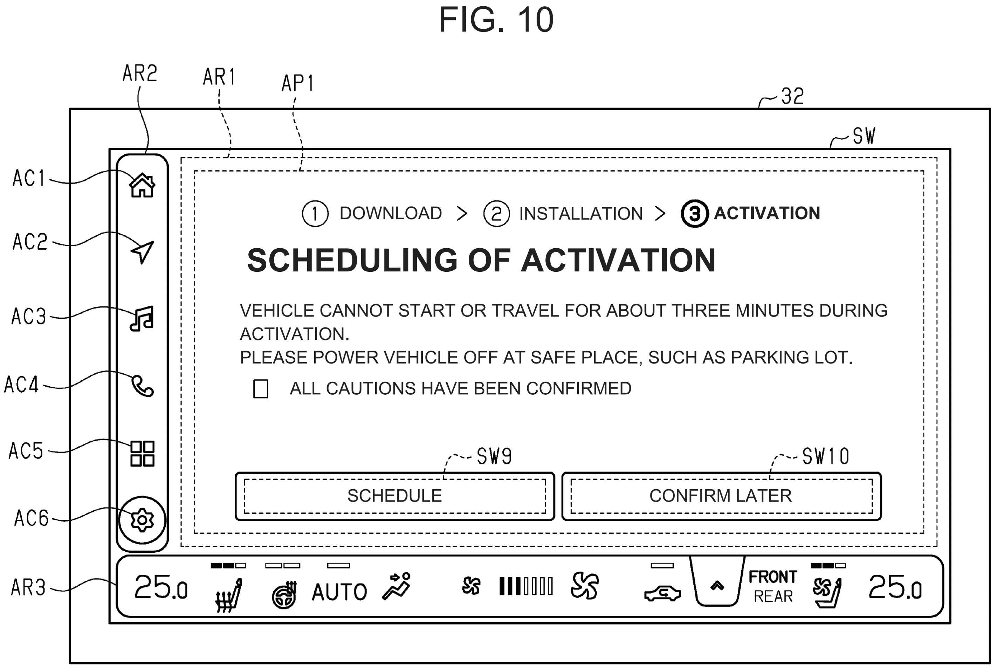

As shown in FIG. 10, the execution device 51 displays the activation detail image AP1 in the main region AR1 of the setting window SW of the display 32. The information shown by the activation detail image AP1 includes information showing the state of the phase in the software update and information showing cautions in performing the activation process.

The information showing the state of the phase in the software update in the activation detail image AP1 shows that, of the download phase, the installation phase, and the activation phase, the processes of the activation phase are currently executed.

The information showing cautions shows that the vehicle 30 cannot start and travel for a certain time during the activation process. The information showing cautions shows an operation on the vehicle 30 that is needed to perform the activation process. Specifically, the operation on the vehicle 30 that is needed to perform the activation process is to put the vehicle 30 in the "off" state at a safe place, such as a parking lot.

The activation detail image AP1 includes an image showing a checkbox that is checked to indicate that the cautions have been confirmed, an image showing a schedule switch SW9, and an image showing a hold switch SW10.

The image showing the checkbox is an image that is touch-operated to become a checked state that means the cautions have been confirmed. The schedule switch SW9 is a switch for scheduling performing the activation process when the vehicle 30 is put in the "off" state. The hold switch SW10 is a switch for not scheduling performing the activation process next time the vehicle 30 is put in the "off" state. The hold switch SW10 is represented by a string of characters indicating later confirmation.

As shown in FIG. 7, after displaying the activation detail image AP1 on the display 32 in step S46, the execution device 51 displays the activation detail image AP1 until the schedule switch SW9 or the hold switch SW10 is touch-operated. Thereafter, the execution device 51 ends the current series of processes. When the schedule switch SW9 is touch-operated, the execution device 51 performs the activation process next time the power source of the vehicle 30 changes from the "off" state to the "on" state. When the hold switch SW10 is touch-operated, the execution device 51 displays the activation detail image AP1 on the display 32 next time the power source of the vehicle 30 changes from the "off" state to the "on" state.

### Workings of Embodiment

In this embodiment, the agreement switch SW1 needs to be touch-operated by the user of the vehicle 30 for the master ECU 50 to proceed with the processes of the software update in the state where the download-completed image DP2 is displayed.

In this embodiment, the process of step S15 in the master ECU 50, i.e., the download process of the software information SF is in some cases completed while the vehicle 30 is traveling. In this case, if the traveling speed DS is equal to or higher than the specified speed RS, the download-completed image DP2 is not displayed. When the traveling speed DS has become lower than the specified speed RS, the download-completed image DP2 is displayed.

### Advantages of Embodiment

In the master ECU 50, even when the download process of the software information SF has been completed, the execution device 51 does not display the download-completed image DP2 on the display 32, if the traveling speed DS of the vehicle 30 is not lower than the specified speed RS. This can prevent the driver of the vehicle 30 from becoming distracted by what is displayed on the display 32 as the download-completed image DP2 is displayed on the display 32 in the state where the traveling speed DS is equal to or higher than the specified speed RS.

The download-completed image DP2 includes the image showing the agreement switch SW1 that is touch-operated to display the installation agreement image IP1 for accepting an agreement to the installation process. When the agreement switch SW1 is touch-operated, the execution device 51 displays the installation agreement image IP1 on the display 32.

In the state where the download-completed image DP2 is displayed, the driver of the vehicle 30 needs to perform an operation on the display 32 for agreeing to the installation process. The master ECU 50 can avoid requesting the driver of the vehicle 30 to touch-operate the agreement switch SW1 on the display 32 in the state where the traveling speed DS is equal to or higher than the specified speed RS.

The specified speed RS is a speed higher than zero. The execution device 51 displays the installation-completed image IP3 on the display 32 on condition that the vehicle 30 is in a stationary state after the installation process of the software information SF has been completed.

Even when the installation process of the software information SF has been completed while the vehicle 30 is in a traveling state, the execution device 51 does not display the installation-completed image IP3 on the display 32 until the vehicle 30 is put in a stationary state. This can prevent the driver of the vehicle 30 from becoming distracted by what is displayed on the display 32 as the installation-completed image IP3 is displayed on the display 32 while the vehicle 30 is in a traveling state.

The installation-completed image IP3 includes the image showing the confirmation switch SW7. The execution device 51 displays the activation detail image AP1 on the display 32 when the image showing the confirmation switch SW7 is touch-operated.

In the state where the installation-completed image IP3 is displayed, the driver of the vehicle 30 needs to perform an operation on the display 32 for displaying the image showing the detailed information relating to activation.

The master ECU 50 can avoid requesting the driver of the vehicle 30, while the vehicle 30 is in a traveling state, to perform an operation for displaying the detailed information relating to the activation process on the display 32.

The detailed information relating to the activation process includes the information showing the operation on the vehicle 30 that is needed to perform the activation process. The operation on the vehicle 30 that is needed to perform the activation process is such that there is a substantial need for the contents of that operation to be confirmed by the driver of the vehicle 30. Accordingly, confirming the contents of the operation requires the driver of the vehicle 30 to exert attention. The master ECU 50 can avoid, while the vehicle 30 is in a traveling state, displaying on the display 32 the image showing information that requires the driver of the vehicle 30 to exert great attention.

### Modified Examples

The above-described embodiment can be implemented with changes made thereto as follows. The above-described embodiment and the following modified examples can be implemented in combination within such a range that no technical contradiction arises.

The vehicle 30 may include a processor. The processor may perform the processes of each of the electronic control device 40, the master ECU 50, and the execution device 51. The processor may be configured to: perform control of the display 32; perform the download process of the software information SF including information relating to a software update; determine, after the download process of the software information SF has been completed, whether the traveling speed DS of the vehicle 30 is lower than the specified speed RS; and display the download-completed image DP2 on the display 32 when the traveling speed DS of the vehicle 30 is lower than the specified speed RS.

The display 32 need not be a touch display. For example, the vehicle 30 may include buttons, such as push buttons, and the master ECU 50 may accept an agreement from the user of the vehicle 30 as a specific button is operated.

The control device of the display 32 is not limited to the master ECU 50. For example, when the vehicle 30 includes the display 32 and a multimedia ECU that controls an audio device installed in the vehicle 30, the multimedia ECU may be the control device of the display 32. In this case, the multimedia ECU may control what is displayed on the display 32 by storing and executing the control program PR3, while the master ECU 50 may function only as the OTA master by storing and executing the master program PR2.

In the above-described embodiment, the master ECU 50 includes the execution device 51 that is a processing circuit including one or more processors that execute various processes in accordance with a computer program (software). However, the master ECU 50 may instead include a processing circuit including one or more dedicated hardware circuits, such as an application-specific integrated circuit (ASIC), that execute at least some of the various processes. Or the master ECU 50 may include a processing circuit including a combination of one or more processors and one or more dedicated hardware circuits. The processor includes a CPU and memories, such as an RAM and an ROM. The memories store program codes or instructions configured to cause the CPU to execute processes. The term "memory," i.e., "computer-readable medium" covers all available media that can be accessed by a general- or special-purpose computer. The foregoing description applies to the target ECU 60 and the management device 22 as well.

Among the target ECUs 60, there may be only one target ECU 60 or two or more target ECUs 60 that are subject to a software update. The master ECU 50 may be subject to a software update.

The series of processes in a software update may be changed as appropriate. For example, in the series of processes in a software update, the master ECU 50 need not perform the process of step S11 and the management server 20 need not perform the process of step S12. For example, the processes of the download phase should include at least the processes of step S14 and step S15, while the process of step S13 may be omitted. For example, the master ECU 50 need not perform the processes of step S22 and step S23.

The master ECU 50 need not accept an operation from the driver of the vehicle 30 to perform the processes of the activation phase. In this case, the master ECU 50 may omit the process of step S45.

The specified speed RS need not be a speed higher than zero. For example, the specified speed RS may be zero. After the installation process of the software information SF has been completed, the execution device 51 need not display the installation-completed image IP3 on the display 32 on condition that the vehicle 30 is in a stationary state. For example, after the installation process of the software information SF has been completed, the execution device 51 may display the installation-completed image IP3 on the display 32 on condition that the traveling speed DS is lower than the specified speed RS.

How the download-in-progress image DP1 is displayed is not limited to the example in the above-described embodiment. For example, a pop-up window may be displayed so as to overlap a window being displayed, and the download-in-progress image DP1 may be displayed in this pop-up window.

Details of the setting window SW are not limited to the example in the above-described embodiment. For example, a heating device and a cooling device may be operated as an image shown in the status display region AR3 is touch-operated. The application display region AR2 may be omitted from the setting window SW, or the status display region AR3 may be omitted therefrom.

The information shown by the download-in-progress image DP1 is not limited to the example in the above-described embodiment. The download-in-progress image DP1 should at least show that the download is in progress. For example, the download-in-progress image DP1 may show only the information showing the extent of progress of the download.

How the download-completed image DP2 is displayed is not limited to modal display. For example, the download-completed image DP2 may be displayed in the main region AR1 of the setting window SW.

The download-completed image DP2 need not include the image showing the agreement switch SW1. In this case, for example, the execution device 51 need not display the installation agreement image IP1 on the display 32 when the image showing the agreement switch SW1 is touch-operated. In this case, the master ECU 50 may omit the process of step S35. That is, the master ECU 50 need not accept an agreement from the driver of the vehicle 30 to perform the processes of the installation phase.

How the installation agreement image IP1 is displayed is not limited to the example in the above-described embodiment. For example, a pop-up window may be displayed so as to overlap a window being displayed, and the download-in-progress image DP1 may be displayed in this pop-up window.

The installation agreement image IP1 need not include the update contents switch SW3. The installation agreement image IP1 need not include the hold switch SW5. When there is no hold switch SW5, for example, the master ECU 50 may determine that the installation process has been put on hold if the start switch SW4 has not been operated for a prespecified time.

How the installation-in-progress image IP2 is displayed is not limited to the example in the above-described embodiment. For example, a pop-up window may be displayed so as to overlap a window being displayed, and the installation-in-progress image IP2 may be displayed in this pop-up window.

The information shown by the installation-in-progress image IP2 is not limited to the example in the above-described embodiment. The installation-in-progress image IP2 should at least show that installation is in progress. For example, the installation-in-progress image IP2 may show only information showing the extent of progress of the installation process.

How the installation-completed image IP3 is displayed is not limited to modal display. For example, the installation-completed image IP3 may be displayed in the main region AR1 of the setting window SW.

The installation-completed image IP3 need not include the image showing the hold switch SW8. When there is no hold switch SW8, for example, the master ECU 50 may determine that the installation process has been put on hold if the confirmation switch SW7 has not been operated for a prespecified time.

The installation-completed image IP3 need not include the image showing the confirmation switch SW7. The execution device 51 need not display the activation detail image AP1 on the display 32 when the image showing the confirmation switch SW7 is touch-operated. For example, the installation-completed image IP3 may include an image showing a switch for agreeing to activation, and the execution device 51 may perform the process of step S46 on condition that this switch is touch-operated.

How the activation detail image AP1 is displayed is not limited to the example in the above-described embodiment. For example, the execution device 51 may display a pop-up window so as to overlap a window being displayed and display the activation detail image AP1 in this pop-up window.

The detailed information relating to the activation process included in the information shown by the activation detail image AP1 need not include the information showing the operation on the vehicle 30 that is needed to perform the activation process.

The activation detail image AP1 need not include the image showing the hold switch SW10. When there is no hold switch SW10, for example, the master ECU 50 may determine that the activation process has been put on hold if the schedule switch SW9 has not been operated for a prespecified time.

## Claims

1. A control device (50) configured to perform control of a display (32) that is configured to display an image showing information relating to a software update of an electronic control device (40) installed in a vehicle (30), the control device (50) comprising an execution device (51) configured to, after a download process of software information (SF) including information relating to the software update has been completed, display on the display (32) a download-completed image (DP2) showing that the download process has been completed, on condition that a traveling speed (DS) of the vehicle (30) is lower than a specified speed (RS) that is specified beforehand.

2. The control device (50) according to claim 1, wherein:
the display (32) is configured to accept a touch operation;
the download-completed image (DP2) includes an image showing an agreement switch (SW1); and
the execution device (51) is configured to:
determine whether a user has touch-operated the image showing the agreement switch (SW1); and
in a case where the execution device (51) determines that the user has touch-operated the image showing the agreement switch (SW1), display on the display (32) an installation agreement image (IP1) showing information relating to an agreement to an installation process.

3. The control device (50) according to claim 1 or claim 2, wherein:
the specified speed (RS) is a speed higher than zero; and
the execution device (51) is further configured to, after an installation process of the software information (SF) has been completed, display on the display (32) an installation-completed image (IP3) showing that the installation process has been completed, on condition that the vehicle (30) is in a stationary state.

4. The control device (50) according to claim 3, wherein:
the display (32) is configured to accept the touch operation;
the installation-completed image (IP3) includes an image showing a confirmation switch (SW7); and
the execution device (51) is configured to:
determine whether the user has touch-operated the image showing the confirmation switch (SW7); and
in a case where the execution device (51) determines that the user has touch-operated the image showing the confirmation switch (SW7), display on the display (32) an activation detail image (AP1) showing detailed information relating to an activation process.

5. The control device (50) according to claim 4, wherein the detailed information includes information showing an operation on the vehicle (30) that is needed to perform the activation process.

6. The control device (50) according to claim 1, wherein the execution device (51) is configured to stop displaying the download-completed image (DP2) on the display (32) in a case where the traveling speed (DS) of the vehicle (30) is equal to or higher than the specified speed (RS).

7. The control device (50) according to claim 6, wherein the execution device (51) is configured to, in a case where the traveling speed (DS) of the vehicle (30) is equal to or higher than the specified speed (RS), display on the display (32) the download-completed image (DP2) after the traveling speed (DS) of the vehicle (30) has changed to be lower than the specified speed (RS).

8. A vehicle (30), comprising:
a processor; and
a display (32) configured to display an image showing information relating to a software update of the processor,
wherein the processor is configured to:
perform control of the display (32);
perform a download process of software information (SF) including information relating to the software update;
after the download process of the software information (SF) has been completed, determine whether a traveling speed (DS) of the vehicle (30) is lower than a specified speed (RS) that is specified beforehand; and
in a case where the traveling speed (DS) of the vehicle (30) is lower than the specified speed (RS), display on the display (32) a download-completed image (DP2) showing that the download process has been completed.
